# EUROPÄISCHE PATENTSCHRIFT

(11) **EP 1 329 492 B1**
(45) Veröffentlichungstag und Bekanntmachung des Hinweises auf die Patenterteilung: **23.03.2005**
(21) Anmeldenummer: 02028227.3
(22) Anmeldetag: 16.12.2002
(51) Int. Cl.: C09J 133/06, C09J 139/06, C09J 7/02

(54) **Haftklebstoff, enthaltend Vinylpyrrolidon**
Contact adhesive containing vinyl pyrrolidone
Adhésif de contact contenant de la vinylpyrrolidone

(30) Priorität: 22.01.2002 DE 10202446
(43) Veröffentlichungstag der Anmeldung: 23.07.2003
(73) Patentinhaber: BASF AKTIENGESELLSCHAFT, 67056 Ludwigshafen (DE)
(72) Erfinder: Diehl, Heiko, 67487 St. Martin (DE); Schumacher, Karl-Heinz, Dr., 67433 Neustadt (DE); Fink, Ralf, Dr., 67105 Schifferstadt (DE); Jung, Martin, Dr., 68165 Mannheim (DE)

(56) Entgegenhaltungen:
- EP-A- 0 357 204
- EP-A- 0 437 068
- WO-A-91/04151
- US-A- 4 181 752
- US-A- 4 364 972

## Beschreibung

### Beschreibung

Die Erfindung betrifft einen Haftklebstoff, enthaltend ein Gemisch aus
einem strahlenvernetzbaren Polymer A), welches zu mindestens 40 Gew.-% aus C1 bis C18 Alkyl(meth)acrylaten besteht und
einem Polymer B), welches zu mindestens 20 Gew.-% aus Vinylpyrrolidon und zu weniger als 40 Gew.-% aus C1 bis C18 Alkyl (meth) acrylaten besteht
wobei der Anteil des Polymeren B) im Gemisch 0,1 bis 14 Gew.-%, bezogen auf die Summe aus A) + B) ist.

Weiterhin betrifft die Erfindung ein Verfahren zur Herstellung von selbstklebenden Artikeln mit Hilfe dieses Haftklebstoffs. Bei Haftklebstoffen ist sowohl eine gute Haftung (Adhäsion) zum Substrat gewünscht als auch eine ausreichende innere Festigkeit in der Klebstoffschicht (Kohäsion).

Bei strahlenvernetzbaren Haftklebstoffen wird die Kohäsion nach Beschichten des Klebstoffs auf einen Träger durch anschließende photochemisch induzierte Vernetzung erreicht.

Bei Adhäsion und Kohäsion handelt es sich um entgegengesetzte anwendungstechnische Eigenschaften. Maßnahmen, die eine Verbesserung der Adhäsion bewirken, führen im allgemeinen gleichzeitig zu einer Verschlechterung der Kohäsion und umgekehrt.

Aus US 4 364 972 sind Copolymerisate von Acrylaten mit mehr als 15 % Vinylpyrrolidon und ihre Verwendung als Haftklebstoffe bekannt. Der k-Wert als Maß für das Molekulargewicht ist größer 100. Aufgabe der vorliegenden Erfindung war die Verbesserung von Adhäsion und Kohäsion bzw. des Adhäsions-/Kohäsionsverhältnisses.

Die Verbesserung soll ausgehend von den bisher bekannten Polyacrylat-Haftklebstoffen durch möglichst geringfügige Änderungen erreicht werden.

Insbesondere soll die Adhäsion zu unpolaren Substanzen, wie Polyolefinen verbessert werden. Demgemäß wurden die eingangs definierten Haftklebstoffe und ein Verfahren zur Herstellung der selbstklebenden Artikel gefunden.

Gegenstand der Erfindung
ein Haftklebstoff, der Polymere A) und B) enthält.

Das Polymer A) besteht zu mindestens 40 Gew.-%, vorzugsweise zu mindestens 60 Gew.-%, besonders bevorzugt zu mindestens 80 Gew.-% aus C₁-C₁₈ Alkyl(meth)acrylaten.

Genannt seien insbesondere C₁-C₈ Alkyl(meth)acrylate, z.B. Methyl (meth) acrylat, Ethyl(meth)acrylat, n-Butyl(meth)acrylat, 2-Ethylhexyl(methacrylat.

Bevorzugt enthält der Haftklebstoff einen Photoinitiator, so dass Polymer A) mit UV-Licht vernetzbar ist. Bevorzugt ist der Fotoinitiator an das Polymer A) gebunden.

Durch Bestrahlung mit energiereichem Licht, insbesondere UV-Licht bewirkt der Fotoinitiator eine Vernetzung des Polymeren, vorzugsweise durch eine chemische Pfropfreaktion des Fotoinitiators mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen.

Der Haftklebstoff enthält vorzugsweise 0,0001 bis 1 mol, besonders bevorzugt 0,0002 bis 0,1, ganz besonders bevorzugt 0,0003 bis 0,01 mol des Fotoinitiators, bzw. der als Fotoinitiator wirksamen, an das Polymer gebundenen Molekülgruppe, pro 100 g Polymer A).

Beim Fotoinitiator handelt es sich z.B. um Acetophenon, Benzophenon, Benzoinether, Benzyldialkylketone oder deren Derivate.

Bevorzugt ist der Fotoinitiator an das Polyacrylat gebunden.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Geeignete copolymerisierbare Fotoinitiatoren sind Acetophenonoder Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. bis 100 C-Atome enthalten.

Geeignete Acetophenon- oder Benzophenonderivate sind z.B. in EP-A-346 734, EP-A-377199 (1. Anspruch), DE-A-4 037 079 (1. Anspruch) und DE-A- 3 844 444 (1. Anspruch) beschrieben und sind durch diesen Verweis auch in der vorliegenden Anmeldung offenbart. Bevorzugte Acetophenon- und Benzophenonderivate sind solche der Formel 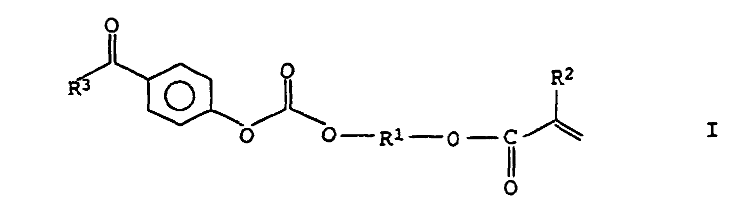 worin R¹ für einen organischen Rest mit bis zu 30 C-Atomen, R² für ein H-Atom oder eine Methylgruppe und R³ für eine gegebenenfalls substituierte Phenylgruppe oder eine C₁-C₄-Alkylgruppe steht.

R¹ steht besonders bevorzugt für eine Alkylengruppe, insbesondere für eine C₂-C₈-Alkylengruppe.

R³ steht besonders bevorzugt für eine Methylgruppe oder eine Phenylgruppe.

Weitere Monomere, aus denen das Polymer A) aufgebaut sein kann, sind z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren.

Als Vinylester kommen insbesondere Vinylpropionat und besonders bevorzugt Vinylacetat in Betracht.

Als vinylaromatische Verbindungen kommen z.B. Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether, Vinylethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als weitere Monomere in Betracht kommen insbesondere auch Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Funmmarsäure.

Weitere Monomere sind z. B. auch Hydroxylgruppen enthaltende Monomere, insbesondere C₁-C₁₀-Hydroxyalkyl(meth)acrylate, (Meth)acrylamid

Darüberhinaus seinen Phenyloxyethylglykolmono-(meth)acrylat, Glydidylacrylat, Glycidylmethacrylat, Amino-(meth)acrylate wie 2-Aminoethyl(meth)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Das Polymer A) hat vorzugsweise einen K-Wert von maximal 80, insbesondere von 30 bis 80, besonders bevorzugt von 40 bis 60, gemessen in Tetrahydrofuran (1%ige Lösung, 21°C).

Der K-Wert nach Fikentscher ist ein Maß für das Molekulargewicht und Viskosität des Polymeren.

Die Glasübertragungstemperatur (Tg) des Polymeren A) beträgt vorzugsweise -60 bis +10°C, besonders bevorzugt -55 bis 0°C, ganz besonders bevorzugt -55 bis -10°C.

Die Glasübertragungstemperatur des Polymeren A) läßt sich nach üblichen Methoden wie Differentialthermoanalyse oder Differential Scanning Calorimetrie (s. z.B. ASTM 3418/82, sog. "midpoint temperature" bestimmen.

Polymere A) können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Durch Emulsionspolymerisation werden wässrige Dispersionen des Polymeren A) erhalten. Vorzugsweise werden die Polymeren durch Polymerisation der Monomeren in Lösungsmitteln (Lösungspolymerisation), insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage. Ferner können Ketone, wie Aceton, Methylethylketon, Methylisobutylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen, Ketonperoxide und Alkylperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymeren können dann in lösungsmittelfreiem Zustand, d.h. als Schmelzen, eingesetzt werden. In manchen Fällen ist es auch von Vorteil, die Polymeren durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Die in dem erfindungsgemäßen Gemisch verwendeten Polymeren A) sind vorzugsweise lösungsmittelfrei. Ein Restgehalt an Lösungsmitteln, z.B. organischen Lösungsmitteln und/oder Wasser, kann jedoch unter 5 Gew.-Teilen, insbesondere unter 2 Gew.-Teil, besonders bevorzugt unter 1 Gew.-Teilen, ganz besonders bevorzugt unter 0,5 Gew.-Teilen bzw. unter 0,1 Gew.-Teil Lösungsmittel, bezogen auf 100 Gew.-Teile der Summe aus Polymer A) und Polymer B), betragen.

Neben dem Polymer A) enthält das erfindungsgemäße Gemisch ein Polymer B), welches zu mindestens 20 Gew.-% aus Vinylpyrrolidon besteht.

Bevorzugt steht Polymer B) zu mindestens 30 Gew.-%, ganz besonders bevorzugt zu mindestens 50 Gew.-% aus Vinylpyrrolidon. Unter Vinylpyrrolidon wird hier N-Vinylpyrrolidon verstanden.

Als weitere Monomere kommen z.B. alle bereits oben zu Polymer A) aufgeführten Monomeren in Betracht. Vorzugsweise handelt es sich bei den weiteren Monomeren um Vinylester von bis zu 20, insbesondere bis zu 6 C-Atomen enthaltenden Carbonsäuren. Genannt seien insbesondere Vinylpropionat und ganz besonders bevorzugt Vinylacetat.

Der Gehalt der Vinylester kann z.B. 0 - 80 Gew.-%, insbesondere 0 bis 70 Gew.-% und besonders bevorzugt 0 bis 50 Gew.-%, bezogen auf Polymer B) betragen.

In Betracht kommt in einer besonderen Ausführungsform ein Gehalt von 30 bis 70 Gew.-% Vinylester, insbesondere Vinylacetat.

Insbesondere beträgt der Gehalt an Vinylpyrrolidon und Vinylestern, insbesondere Vinylacetat, zusammen mindestens 60 Gew.-%, vorzugsweise mindestens 80 Gew.-% insbesondere auch mindestens 90 Gew.-%.

Als weitere Monomere kommen z.B. auch Vinylimidazol und die sonstigen unter A) genannten Monomere in Betracht. Polymer B) kann auch strahlenvernetzbar sein. Vorzugsweise enthält Polymer B) dazu die unter A) aufgeführten copolymerisierbaren Fotoinitiatoren.

Polymer B) benötigt keinen Gehalt an C₁-C₁₈-Alkyl(meth)acrylaten. Der Gehalt an C₁-C₁₈-Alkyl(meth)acrylaten liegt daher unter 40 Gew.-%, insbesondere unter 20 Gew.-%, besonders bevorzugt unter 5 Gew.-% oder bei 0 Gew.-%.

Polymere B) werden vorzugsweise durch radikalische Polymerisation, insbesondere in einem Lösungsmittel (Lösungspolymerisation) hergestellt.

Als Lösungsmittel in Betracht kommen z.B. Wasser Alkohole oder andere polare organische Lösungsmittel in Betracht.

Das Polymer B) hat vorzugsweise einen K-Wert von maximal 80, insbesondere von 10 bis 70, besonders bevorzugt von 15 bis 60, gemessen in Tetrahydrofuran (1%ige Lösung, 21°C).

Der K-Wert nach Fikentscher ist ein Maß für das Molekulargewicht und Viskosität des Polymerisats.

Falls Polymer A) als wässrige Dispersion vorliegt, kann Polymer B) einfach zugegeben werden.

Im bevorzugten Fall, dass Polymer A) durch Lösungspolymerisation in einem organischen Lösungsmittel erhalten wurde, kann Polymer B) einfach der Lösung zugesetzt werden und, falls gewünscht, danach das Lösungsmittel entfernt werden.

Durch diese Verfahrensweise erhält man besonders vorteilhafte Mischungen der Polymeren A) und B).

Vorzugsweise sind das Gemisch der Polymeren A) und B) und auch der Haftklebstoff wasser- und lösemittelfrei bzw. enthalten allenfalls die bereits oben angegeben Restmengen von weniger als 5 Gew.-Teilen, insbesondere weniger als 2 Gew.-Teilen; weniger als 1 Gew.-Teil, weniger als 0,5 Gew.-Teile oder weniger als 0,1 Gew.-Teil Wasser und/oder Lösemittel auf 100 Gew.-Teile der Summe von A) + B).

Der Anteil von Polymer B) ist 0,1 bis 14 Gew.-Teile, besonders bevorzugt 2 bis 14 und ganz besonders bevorzugt 5 bis 14 und insbesondere 10 bis 14 Gew.-Teile, bezogen auf 100 Gew.-Teile der Summe von A) + B).

Die erfindungsgemäßen Haftklebstoffe können allein aus dem Gemisch von Polymer A) und B).

Die Haftklebstoffe können weitere Additive enthalten. Soweit Fotoinitiatoren nicht bereits an Polymer A) gebunden sind, können sie den Haftklebstoffen zu einem beliebigen Zeitpunkt zugegeben werden.

Weitere Additive sind z.B. Füllstoffe, Farbstoffe, Verlaufshilfsmittel und insbesondere Tackifier (klebrigmachende Harze).

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt z.B. 5 bis 100 Gew.-Teile. besonders bevorzugt 10 bis 50 Gew.-Teile. bezogen auf 100 Gew.-Teile Polyacrylat (fest/fest).

Diese Haftklebstoffe werden vorzugsweise als Schmelzhaftklebstoffe verwendet, d.h. sie werden aus der Schmelze auf die gewünschten Träger aufgetragen.

Insbesondere eigenen sich die erfindungsgemäßen Haftklebstoffe bzw. Schmelzklebstoffe zur Herstellung von selbstklebenden Artikeln, wie Etiketten, Klebebändern oder Klebefolien, z.B. Schutzfolien.

Die selbstklebenden Artikel bestehen im allgemeinen aus einem Träger und einer ein- oder beidseitig, vorzugsweise einseitig aufgebrachten Schicht des Klebstoffs.

Bei dem Trägermaterial kann es sich z.B. im Papier, Kunststofffolien aus Polyolefinen oder PVC handeln.

Die selbstklebenden Artikel werden insbesondere dadurch hergestellt, dass der Haftklebstoff auf den Träger aufgebracht wird und anschließend eine Vernetzung mit UV-Licht erfolgt.

Die selbstklebenden Artikel eignen sich für unterschiedlichste Substrate. Die Substrate können aus Metallen, Papier, Karton, Holz, Kunststoffen etc. sein.

Es ist ein besonderer Vorteil der Erfindung, dass mit den erfindungsgemäßen Haftklebern auch sehr gute Haftung der selbstklebenden Artikel auf unpolaren Oberflächen, insbesondere auf Oberflächen aus Polyolefinen, z.B. Polyethylen oder Polypropylen erreicht wird.

Generell wird eine sehr gute Adhäsion und Kohäsion erreicht.

### Beispiele

### Haftklebstoff 1 (H1)

Es handelt sich hierbei um eine Mischung eines Polyacrylats (Polymer A)) mit einem Polyvinylpyrrolidon (Polymer B)), hergestellt durch Lösungspolymerisation des Polyacrylats, Zugabe des Polyvinylpyrrolidon und Abdestillation des Lösungsmittels.

### Polymer A) bestand aus

| | |
|---|---|
| 94,7 Gew.-% | n-Butylacrylat (BA) |
| 5 Gew.-% | Acrylsäure (AS) |
| 0,3 Gew.-% | Fotoinitiator (F) |
| | der obigen Formel I |

K-Wert 45,8

### Polymer B) bestand ausschließlich aus N-Vinylpyrrolidon; K-Wert = 17

Das Gewichtsverhältnis von A) zu B) betrug 90 : 10.

### Haftklebstoff 2 (H2) (zum Vergleich)

### Polymer C) aufgebaut aus:

| | |
|---|---|
| 84,7 Gew.-% | BA |
| 10 Gew.-% | Vinylpyrrolidon (VP) |
| 5 Gew.-% | AS |
| 0.3 Gew.-% | F |

K-Wert betrug 47,3.

### Haftklebstoff 3 (H3) (zum Vergleich)

### Polymer C) aufgebaut aus:

| | |
|---|---|
| 77,7 Gew.-% | BA |
| 17 Gew.-% | VP |
| 5 Gew.-% | AS |
| 0,3 Gew.-% | F |

Der K-Wert betrug 47,3.

Die Haftklebstoffe H1 - H3 sind wasser- und lösemittelfreie Schmelzhaftkleber.

### Anwendungstechnische Prüfung

Die Haftklebstoffe H1 - H3 wurden mit einer Auftragsmenge von 60 g/m² auf Polyesterfolie (Hostaphan RN 36) beschichtet, auf ein Transportband gelegt und mit 10 mJ/cm² (UV-C²)-Strahlung) bestrahlt.

Anschließend wurde die Schälfestigkeit (Adhäsion) und Scherfestigkeit (Kohäsion) bestimmt.

Der mit Haftklebstoff beschichtete Träger wurde in 25 mm breite Prüfstreifen geschnitten. Zur Bestimmung der Scherfestigkeit wurden die Prüfstreifen mit einer verklebten Fläche von 25 mm² auf ein chromiertes V2A-Prüfblech geklebt, mit einer 1 kg schweren Rolle 1 mal angerollt, 10 min gelagert (im Normklima, 50 % rel. Luftfeuchtigkeit 1 bar, 23°C) und anschließend hängend mit einem 1 kg Gewicht belastet (im Normklima). Das Maß für die Scherfestigkeit war die Zeit bis zum Abfallen des Gewichts; es wurde jeweils der Durchschnitt aus 5 Messungen berechnet.

Bei der Bestimmung der Schälfestigkeit (Adhäsion) wurde jeweils ein 2,5 cm breiter Prüfstreifen auf ein chromiertes V2A-Prüfblech geklebt (alternativ auf Polypropylen-Folie (PP, siehe Tabelle) und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab.

Die Schälfestigkeit wurde 24 Stunden nach der Verklebung bestimmt. Nach dieser Zeit hat sich die Klebekraft voll ausgebildet.

**Tabelle 1**

| Kleber | Schälfestigkeit N/25 mm Stahl | | Schälfestigkeit N/25 mm 24 Std. | Scherfestigkeit 25 x 25 mm Stahl |
|---|---|---|---|---|
| | 1. min | 24 Std. | PP | |
| H1 | 11,8 | 20,5 | 5,8 | 98h18' |
| H2 | 11,0 | 15,9 | 7,3 | 45h31' |
| H3 | 13,6 | 17,9 | 0,5 | 64h31' |

## Patentansprüche

1. Haftklebstoff, enhaltend ein Gemisch aus
einem strahlenvernetzbaren Polymer A), welches zu mindestens 40 Gew.-% aus C1 bis C18 Alkyl(meth)acrylaten besteht und
einem Polymer B), welches zu mindestens 20 Gew.-% aus Vinylpyrrolidon und zu weniger als 40 Gew.-% aus C1 bis C18 Alkyl(meth)acrylaten besteht
wobei der Anteil des Polymeren B) im Gemisch 0,1 bis 14 Gew.-Teile, bezogen auf 100 Gew.-Teile der Summe aus A) + B) beträgt.

2. Haftklebstoff gemäß Anspruch 1, **dadurch gekennzeichnet, dass** Polymer A) zu mindestens 60 Gew.-% aus C1 bis C18 Alkyl(meth)acrylaten besteht.

3. Haftklebstoff gemäß Anspruch 1 oder 2, **dadurch gekennzeichnet, dass** der Gehalt von Polymer B) mindestens 2 Gew.-%, bezogen auf die Summe aus A) + B) beträgt.

4. Haftklebstoff gemäß einem der Ansprüche 1 bis 3, **dadurch gekennzeichnet, dass** die Polymere A) durch Emulsionspolymerisation hergestellt wird und in Form einer wäßrigen Dispersion vorliegt.

5. Haftklebstoff gemäß einem der Ansprüche 1 bis 4, **dadurch gekennzeichnet, dass** die Polymere A) durch Lösungspolymerisation in einem organischen Lösemittel hergestellt wird.

6. Haftklebstoff gemäß einem der Ansprüche 1 bis 5, **dadurch gekennzeichnet, dass** die Poylmeren A) und B) einen K-Wert nach Fikentscher von maximal 80 (in 1 %iger Lösung, Lösungsmittel Tetrahydrofuran, 21°C) haben.

7. Haftklebstoff gemäß einem der Ansprüche 1 bis 6, **dadurch gekennzeichnet, dass** der Haftklebstoff einen Photoinitiator enthält.

8. Haftklebstoff gemäß Anspruch 7, **dadurch gekennzeichnet, dass** der Photoinitiator an das Polymer A) gebunden ist.

9. Haftklebstoff gemäß einem der Ansprüche 1 bis 8, dadurch erhältlich, dass das Polymer B) zur wässrigen Dispersion des Polymeren A) gegeben wird.

10. Haftklebstoff gemäß einem der Ansprüche 1 bis 9, dadurch erhältlich, dass das Polymer B) zur organischen Lösung des _{P}olymeren A) gegeben wird und anschließend das Lösungsmittel abgetrennt wird.

11. Haftklebstoff gemäß einem der Ansprüche 1 bis 10, **dadurch gekennzeichnet, dass** der Gehalt an Wasser und organischen Lösemitteln weniger als 5 Gew.-Teile bezogen auf 100 Gew.-Teile der Summe von A) und B) beträgt.

12. Haftklebstoff gemäß einem der Ansprüche 1 bis 11, **dadurch gekennzeichnet, dass** es sich um einen Schmelzhaftklebstoff handelt.

13. Verwendung des Haftklebstoffs gemäß einem der Ansprüche 1 bis 12 zur Herstellung selbstklebender Artikel, insbesondere von Etiketten und Klebebändern.

14. Verfahren zur Herstellung von selbstklebenden Artikeln, **dadurch gekennzeichnet, dass** ein Haftklebstoff gemäß einem der Ansprüche 1 bis 12 auf Substrate, z.B. Etiketten, Klebebänder oder Folien aufgetragen wird und anschließend eine Vernetzung durch UV Licht erfolgt.

15. Selbstklebende Artikel erhältlich durch ein Verfahren gemäß Anspruch 14.

16. Selbstklebende Artikel, beschichtet mit einem Haftklebstoff gemäß Ansprüchen 1 bis 12.

## Claims

1. A pressure sensitive adhesive comprising a mixture of
a radiation-crosslinkable polymer A) composed of at least 40% by weight of C1 to C18 alkyl (meth)acrylates and
a polymer B) composed of at least 20% by weight of vinylpyrrolidone and of less than 40% by weight of C1 to C18 alkyl (meth)acrylates
the fraction of the polymer B) in the mixture being 0.1 to 14% by weight, based on 100% by weight of the sum of A) + B).

2. An adhesive as claimed in claim 1, wherein the polymer A) is composed of at least 60% by weight of C1 to C18 alkyl (meth)acrylates.

3. An adhesive as claimed in claim 1 or 2, wherein the amount of polymer B) is at least 2% by weight, based on the sum of A) + B).

4. An adhesive as claimed in any of claims 1 to 3, wherein the polymer A) is prepared by emulsion polymerization and is present in the form of an aqueous dispersion.

5. An adhesive as claimed in any of claims 1 to 4, wherein the polymer A) is prepared by solution polymerization in an organic solvent.

6. An adhesive as claimed in any of claims 1 to 5, wherein the polymers A) and B) have a Fikentscher K value of not more than 80 (in 1% strength solution, in tetrahydrofuran solvent, at 21°C).

7. An adhesive as claimed in any of claims 1 to 6, comprising a photoinitiator.

8. An adhesive as claimed in claim 7, wherein the photoinitiator was attached to the polymer A).

9. An adhesive as claimed in any of claims 1 to 8, obtainable by the polymer B) being added to the aqueous dispersion of the polymer A).

10. An adhesive as claimed in any of claims 1 to 9, obtainable by the polymer B) being added to the organic solution of polymer A) and then the solvent being separated off.

11. An adhesive as claimed in any of claims 1 to 10, wherein the amount of water and organic solvents is less than 5 parts by weight per 100 parts by weight of the sum of A) and B).

12. An adhesive as claimed in any of claims 1 to 11, which is a hotmelt adhesive.

13. The use of the adhesive of any of claims 1 to 12 for producing self-adhesive articles, especially labels and adhesive tapes.

14. A process for producing self-adhesive articles, which comprises drying an adhesive as claimed in any of claims 1 to 12 to substrates, e.g., labels, adhesive tapes or films, and subsequently effecting crosslinking by UV light.

15. A self-adhesive article obtainable by a process as claimed in claim 14.

16. A self-adhesive article coated with an adhesive as claimed in any of claims 1 to 12.

## Revendications

1. Adhésif de contact, contenant un mélange
d'un polymère A) réticulable sous rayonnement, qui est constitué pour au moins 40% en poids de (méth)acrylates d'alkyle en C₁ à C₁₈, et
d'un polymère B), qui est constitué pour au moins 20% en poids de vinylpyrrolidone et pour moins de 40% en poids de (méth)acrylates d'alkyle en C₁ à C₁₈,
la fraction du polymère B) dans le mélange étant de 0,1 à 14 parties en poids, par rapport à 100 parties en poids de la somme de A) + B) .

2. Adhésif de contact suivant la revendication 1, **caractérisé en ce que** le polymère A) est constitué pour au moins 60% en poids de (méth)acrylates d'alkyle en C₁ à C₁₈.

3. Adhésif de contact suivant l'une des revendications 1 et 2, **caractérisé en ce que** la teneur en polymère B) est d'au moins 2% en poids, par rapport à la somme de A) + B).

4. Adhésif de contact suivant l'une des revendications 1 à 3, **caractérisé en ce que** le polymère A) est préparé par polymérisation en émulsion et **en ce qu'**il se présente sous la forme d'une dispersion aqueuse.

5. Adhésif de contact suivant l'une des revendications 1 à 4, **caractérisé en ce que** le polymère A) est préparé par polymérisation en solution dans un solvant organique.

6. Adhésif de contact suivant l'une des revendications 1 à 5, **caractérisé en ce que** les polymères A) et B) présentent une valeur K selon Fikentscher d'au maximum 80 (en solution à 1%, solvant : tétrahydrofuranne, 21°C).

7. Adhésif de contact suivant l'une des revendications 1 à 6, **caractérisé en ce que** l'adhésif de contact contient un photo-initiateur.

8. Adhésif de contact suivant la revendication 7, **caractérisé en ce que** le photo-initiateur est fixé sur le polymère A).

9. Adhésif de contact suivant l'une des revendications 1 à 8, que l'on peut obtenir par le fait que le polymère B) est ajouté à une dispersion aqueuse du polymère A).

10. Adhésif de contact suivant l'une des revendications 1 à 9, que l'on peut obtenir par le fait que le polymère B) est ajouté à la solution organique du polymère A) et qu'ensuite le solvant est isolé.

11. Adhésif de contact suivant l'une des revendications 1 à 10, **caractérisé en ce que** la teneur en eau et en solvants organiques est inférieure à 5 parties en poids, par rapport à 100 parties en poids de la somme de A) et de B).

12. Adhésif de contact suivant l'une des revendications 1 à 11, **caractérisé en ce qu'**il s'agit d'un adhésif de contact fusible.

13. Utilisation de l'adhésif de contact suivant l'une des revendications 1 à 12, pour la préparation d'articles autocollants, en particulier d'étiquettes et de bandes adhésives.

14. Procédé de préparation d'articles autocollants, **caractérisé** en qu'un adhésif de contact suivant l'une des revendications 1 à 12 est appliqué sur des substrats, par exemple des étiquettes, des bandes adhésives ou des feuilles, et en ce qu'ensuite une réticulation a lieu par une lumière U.V.

15. Articles autocollants que l'on peut obtenir par un procédé suivant la revendication 14.

16. Articles autocollants, enduits d'un adhésif de contact suivant les revendications 1 à 12.
